# EUROPÄISCHE PATENTSCHRIFT

(11) **EP 3 446 505 B1**
(45) Veröffentlichungstag und Bekanntmachung des Hinweises auf die Patenterteilung: **07.01.2026**
(21) Anmeldenummer: 17719999.9
(22) Anmeldetag: 13.04.2017
(51) Int. Cl.: H04W 12/06, H04W 12/12

(54) **IMEI SPEICHERUNG**
IMEI STORAGE
MÉMORISATION DE NUMÉRO D'ÉQUIPEMENT IMEI

(30) Priorität: 19.04.2016 DE 102016004735
(43) Veröffentlichungstag der Anmeldung: 27.02.2019
(60) Teilanmeldung: 20154505.0
(73) Patentinhaber: Giesecke+Devrient Mobile Security Germany GmbH, 81677 München (DE)
(72) Erfinder: GÖTZE, Frank, 81379 München (DE); DIETZE, Claus, 82395 Obersöchering (DE); EICHHOLZ, Jan, 80997 München (DE)
(74) Vertreter: Ter Meer Steinmeister & Partner
(86) Internationale Anmeldenummer: PCT/EP2017/000485
(87) Internationale Veröffentlichungsnummer: WO 2017/182118

(56) Entgegenhaltungen:
- WO-A1-2014/134829
- CN-A- 102 083 055
- US-A1- 2006 236 111
- US-A1- 2007 050 622
- US-A1- 2010 180 130
- US-A1- 2012 011 345

## Beschreibung

### Gebiet der Erfindung

Die Erfindung betrifft ein Chipset für ein mobilfunkfähiges Endgerät mit einer dem Endgerät zugeordneten, im Endgerät gespeicherten Endgerät-Seriennummer IMEI, und ein Endgerät.

### Stand der Technik

Die Welt ist mobil vernetzt, und die mobile Vernetzung schreitet weiter. Mobilfunkfähige Endgeräte kommunizieren über Mobilfunknetze. Zu den klassischen mobilfunkfähigen Endgeräten zählen die mobilen Endgeräte wie Smartphones und Mobiltelefone und mobilfunkfähige Tablets. Zu mobilfunkfähigen Endgeräten zählen weiter Regelungsgeräte (Steuerungsgeräte oder Messgeräte oder kombinierte Steuer/Messgeräte) für industrielle Einrichtungen im kommerziellen oder im privaten Umfeld. Industrielle Einrichtungen sind beispielsweise Produktionsanlagen, die ein oder mehrere Regelungsgeräte (Endgeräte) haben, die über ein Mobilfunknetz mit einem Hintergrundsystem oder/und miteinander kommunizieren können. Weitere industrielle Einrichtungen sind Smart Home Einrichtung wie z.B. Heizungen oder Stromverbraucher mit Endgeräten in Gestalt von Regelungsgeräten.

Die IMEI, ausgeschrieben International Mobile Station Equipment Identity, ist eine eindeutige 15-stellige Endgerät-Seriennummer, anhand derer jedes mobile Endgerät im GSM- oder UMTS-System und Nachfolgern weltweit eindeutig identifiziert werden kann. Dual-SIM-Handys besitzen zwei IMEI-Nummern.

Die IMEI eines Mobiltelefons kann durch die im GSM-System standardisierte Eingabe *#06# im Eingabefeld der Telefonnummer abgefragt werden. Diese Abfragemöglichkeit ist erwünscht. Gemäß GSM ist vorgesehen, dass eine IMEI eindeutig und vor Manipulation, z.B. Fälschung oder Änderung, durch den Benutzer geschützt ist. So schreibt [1] ETSI TS 122 016, Kapitel 2 "General", Seite 5 vor: *"The IMEI shall not be changed after the ME's final production process. It shall resist tampering, i.e. manipulation and change, by any means (e.g. physical, electrical and software)."* Die Praxis zeigt hingegen, dass bei vielen seit 2002 auf dem Markt befindlichen Mobiltelefonen eine Manipulation der IMEI möglich ist.

Zur Nutzung eines mobilfunkfähigen Endgeräts, wie Smartphone, Mobiltelefon, in einem Mobilfunknetzwerk eines Netzbetreibers enthält das Endgerät ein Teilnehmeridentitätsmodul mit einem Subskriptions-Profil oder kurz Profil. Das Profil bewerkstelligt die Konfiguration des Endgeräts und der Verbindung des Endgeräts im Mobilfunknetz. Das Profil ist durch einen strukturierten Datensatz gebildet, der den Aufbau, Betrieb und Abbau einer Verbindung des Endgeräts im Mobilfunknetzwerk ermöglicht, und umfasst beispielsweise einen kryptographischen Authentisierungs-Schlüssel Ki und eine International Mobile Subscriber Identity IMSI.

Das Endgerät selbst hat ein Chipset mit einem oder mehreren Endgeräte-Chips zum Betrieb von Funktionen des Endgeräts. Aktuelle (und ältere) Smartphones haben beispielsweise typischerweise ein Chipset, das zumindest drei Endgeräte-Chips umfasst, nämlich einen Transceiver-IC, der die physikalische Funkkommunikation durchführt, einen Baseband-Prozessor BB (oder gleichbedeutend Modem), der Funktionen zur Datenübertragung über Funkkommunikation auf Protokollebene durchführt, und einen Application-Prozessor AP, auf welchem das Betriebssystem und Anwendungssoftware, z.B. Applikationen (z.B. Apps), ausgeführt werden. Als weitere Endgeräte-Chips können Transceiver-ICs für andere Funkkanäle vorgesehen sein, insbesondere für kurzreichweitige Funkkanäle wie NFC (NFC: near field communication) oder Bluetooth.

Das Teilnehmeridentitätsmodul kann herkömmlicherweise in Träger unterschiedlicher Formfaktoren integriert sein, insbesondere Plug-In und Embedded Träger. Teilnehmeridentitätsmodule in Trägern vom Formfaktor Plug-In (z.B. klassische SIM-Karte) und Embedded (zum Einlöten in ein Endgerät vorgesehenes Modul) sind auf einem dedizierten, eigenen Chip oder SoC (System-on-Chip) angeordnet.

Die US 2006/0236111 Al ([2]) betrifft ein Verfahren zur Herstellung einer elektronischen Vorrichtung, umfassend ein Chipset mit Speicher und "Special-PurposeDSP". Dabei ist eine Kombination aus IMEI der elektronischen Vorrichtung und Kunden-ID als ein schutzfähiger Identifikator in einen OTP-Bereich eines Flash-Speichers der elektronischen Vorrichtung geschrieben, wodurch ein Lademodul, das Software in die elektronische Vorrichtung lädt, in die Lage versetzt wird, die zur Neuprogrammierung der elektronischen Vorrichtung berechtigte Einheit, z.B. den autorisierten Kunden der Vorrichtung, eindeutig zu bestimmen.

In der US 2007/0050622 Al ([3]) werden Techniken bereitgestellt, um den Austausch einer OTP Komponente zu verhindern. Die OTP-Komponente kann Teil eines drahtlosen Geräts sein. Die drahtlose Vorrichtung ist so konfiguriert, dass die Programmierung eines neuen IMEI-Codes in die OTP-Komponente nur zulässig ist, wenn sich die drahtlose Vorrichtung in einem sicheren Modus befindet. Ein Challenge-Response-Protokoll wird verwendet, um das drahtlose Gerat in diesen sicheren Modus zu versetzen.

In der US 2012/0011345 Al ([4]) enthalt eine Prozessorhardware (z.B. eUICC) einen Mikrocode-Interpreter. Wenn verschlüsselter Mikrocode in einer Nachricht eines Dienstes enthalten ist, kann der Mikrocode an den Mikrocode-Interpreter übergeben werden. Basierend auf der Entschlüsselung und Ausführung des Mikrocodes auf der Prozessorhardware kann eine erweiterte Funktionalität realisiert werden.

In der WO 2014/134829 Al ([5]) sind Verfahren und MultiSIM-Vorrichtungen mit integrierter SIM-Funktionalität vorgesehen. Das Verfahren umfasst das Herunterladen mindestens eines Abonnements von einem sicheren Anwendungsmanager auf ein sicheres Element mit Fernwartungsfunktionalität innerhalb einer Benutzerausrüstung. Das Verfahren umfasst auch das Bestimmen, ob eine Identität in Bezug auf das mindestens eine Abonnement zugewiesen werden soll oder nicht. Das Verfahren umfasst ferner das Informieren der Benutzereinrichtung über das mindestens eine Abonnement, das bei der Zuweisung der Identität vorhanden ist. Damit können Abonnements und ein Pool von Identitäten effizient und flexibel verwaltet und ferngesteuert werden.

In der US 2010/0180130 Al ([6]) benötigt ein elektronisches Gerat gültige Steuerschlüssel, um die Einstellung der Nutzungsbeschränkung zu andern. Der Vorrichtung sind Steuerschlüssel, ein Geheimschlüssel und ein signiertes Softwareobjekt mit einer Batch-ID und einem Hash des Geheimschlüssels vorgesehen. Für jeden Steuerschlüssel erzeugt die Vorrichtung einen kryptographischen Footprint der an die Vorrichtung und den geheimen Schlüssel gebunden ist. Ein Nachrichten-Authentifizierungscode (MAC) jeder Einstellung der Nutzungsbeschränkung wird erzeugt, der an das Gerat gebundene MAC und ein Steuerschlüssel. Um eine Nutzungsbeschränkung zu andern, erhalt das Gerat einen Steuerschlüssel, validiert ihn anhand des gespeicherten Footprints, ändert die Einstellungen der Nutzungsbeschränkung und erzeugt eine neue Einstellung für die Nutzungsbeschränkung MAC. Die Fußabdrücke der Steuerschlüssel sind an den geheimen Schlüssel gebunden, aber die Vorrichtung behält nur einen Hash des geheimen Schlüssels.

Die CN 102 083 055 A ([7]) bezieht sich auf ein IMEI-Authentifizierungsverfahren, ein IMEI-Schutz Mobilkommunikationsendgerät und eine Initialisierungsvorrichtung davon. Das Verfahren umfasst die folgenden Schritte: Erfassen von Chiffriertext-Authentifizierungsdaten aus einem OTP-Bereich eines FLASH des mobilen Kommunikationsendgerätes und Erfassen eines im FLASH gespeicherten Entschlüsselungsschlüssels; gemäß einem voreingestellten Algorithmus Entschlüsseln der Chiffriertext-Authentifizierungsdaten in Klartext-Authentifizierungsdaten unter Verwendung des Entschlüsselungsschlüssels, worin die Klartext Authentifizierungsdaten mindestens eine IMEI umfassen; und Authentifizieren der Klartext-Authentifizierungsdaten und Ausgeben des Authentifizierungsergebnisses. Die IMEI kann in der OTP-Region des FLASH gespeichert sein, wodurch eine Änderung der IMEI wirksam verhindert wird; und die IMEI ist an die eindeutige Identität des mobilen Kommunikationsendgerätes gebunden, wodurch die Schutzwirkung besser verstärkt wird.

Ein neueres Konzept für den Formfaktor eines Teilnehmeridentitätsmoduls sind integrierte Teilnehmeridentitätsmodule, die auf einem Endgeräte-Chip oder SoC (System-on-Chip) des Endgeräts mit integriert sind, also keinen eigenen Chip besitzen. Integrierte Teilnehmeridentitätsmodule werden mit dem Zusatz "integrated" oder "i" versehen und z.B. als integrated UICC, iUICC, iSIM oder iUSIM bezeichnet.

### Zusammenfassung der Erfindung

Der Erfindung liegt die Aufgabe zu Grunde, ein Chipset für ein mobilfunkfähiges Endgerät anzugeben, in dem sich die dem Endgerät zugeordnete Endgerät-Seriennummer IMEI möglichst manipulationssicher abspeichern lässt, und ein entsprechendes Endgerät.

Die Aufgabe wird durch die Merkmale der unabhängigen Patentansprüche Vorteilhafte Ausgestaltungen der Erfindung sind in den abhängigen Ansprüchen angegeben.

Das erfindungsgemäße Chipset nach Anspruch 1 ist für ein Endgerät wie eingangs definiert vorgesehen, beispielsweise für ein Smartphone bzw. Mobiltelefon oder ein Regelungsgerät im Industrieumfeld. Das Chipset umfassend zumindest einen Secure Processor, in den ein einmal-programmierbarer Speicher integriert ist. Im Chipset ist mindestens eine Endgerät-Serien-nummer - z.B. die IMEI - des Endgeräts gespeichert. Das Verfahren ist dadurch gekennzeichnet, dass im einmal-programmierbaren Speicher Information zur Sicherung der Endgerät-Seriennummer gegen Manipulation gespeichert ist.

Die Lösung nach Anspruch 1 hat den Vorteil, dass der einmal-programmierbare Speicher einmal während der Produktion des Chipsets programmiert wird und später nicht mehr modifiziert werden kann. Hierdurch ist sichergestellt, dass die Information zur Sicherung der Endgerät-Seriennummer so bleibt wie anlässlich der Produktion programmiert und später nicht manipuliert werden kann. Folglich ist über die Sicherungs-Information die Endgerät-Seriennummer gegen Manipulation gesichert.

Daher ist gemäß Anspruch 1 ein Chipset geschaffen, bei dem die Endgerät-Seriennummer gegen Manipulation gesichert ist.

Ein erfindungsgemäßes mobilfunkfähiges Endgerät umfasst ein erfindungsgemäßes Chipset.

Gemäß einer Ausführungsform der Erfindung ist ein Zugriff auf die im einmal-programmierbaren Speicher gespeicherte Information zur Sicherung der Endgerät-Seriennummer oder/und auf die Endgerät-Seriennummer ausschließlich durch den Secure Processor möglich.

Gemäß weiteren Ausführungsformen der Erfindung umfasst das Chipset mindestens einen weiteren Prozessor, insbesondere einen Application Processor oder/und einen Baseband Processor oder/und ein oder mehrere weitere Prozessoren, wobei ein Zugriff auf die im einmal-programmierbaren Speicher gespeicherte Information zur Sicherung der Endgerät-Serien-nummer oder /und auf die Endgerät-Seriennummer selbst durch den mindestens einen weiteren Prozessor nicht möglich ist.

Der Secure Processor hat im Vergleich zu anderen Processor Cores des Chipset, wie z.B. einem Baseband Processor oder einem Application Processor oder einem Interface (NFC, Bluetooth, WLAN, etc.) Processor in der Regel ein höheres Sicherheitsniveau. Daher ist es bevorzugt, den sicherheitskritischen Zugriff auf die Information zur Sicherung der Endgerät-Seriennummer oder/und auf die Endgerät-Seriennummer selbst ausschließlich dem Secure Processor zu gewähren.

Das Chipset umfasst wahlweise genauer als einen weiteren Prozessor einen Baseband Processor (BB), der für die Protokollebene einer Mobilfunkverbindung zwischen dem Chipset und einem Server außerhalb des Chipset eingerichtet ist. Bei dieser Ausführungsform der Erfindung sind der Secure Processor und der Baseband Processor dazu eingerichtet, einen Secure Channel zwischen dem Secure Processor und dem Baseband Processor einzurichten und zu betreiben, so dass über die Funkverbindung vom Server an das Chipset gesendete Nachrichten, insbesondere Nachrichten umfassend aktualisierte Endgerät-Seriennummern, vom Baseband Processor entgegenommen werden können und über den Secure Channel an den Secure Processor weitergeleitet werden können. Über den Secure Channel können weiter auch Aktualisierungsdaten für Subskriptions-Profile für integrierte Teilnehmeridentitätsmodule des Chipset oder Aktualisierungsdaten für Betriebssysteme des Chipset sicher zwischen dem Baseband Processor und dem Secure Processor übertragen werden.

Gemäß weiteren Ausführungsformen der Erfindung sind im Chipset mindestens zwei, oder mehr, Endgerät-Seriennummer des Endgeräts gleichzeitig gespeichert sind, wobei mindestens zwei, oder mehr, Endgerät-Seriennummern mindestens zwei unterschiedlichen Komponenten des Chipset zugeordnet sind. Als Komponenten können insbesondere unterschiedliche Prozessoren des Chipset vorgesehen sein. Weiter können als Komponenten unterschiedliche (integrierte) Teilnehmeridentitätsmodule oder unterschiedliche Subskriptions-Profile oder unterschiedliche Betriebssysteme des Chipset vorgesehen sein. Hierbei hat also jedes unterschiedliche (integrierte) Teilnehmeridentitätsmodul bzw. jedes unterschiedliche Subskriptions-Profil bzw. jedes unterschiedliche Betriebssystem seine eigene zugeordnete Endgerät-Seriennummer (z.B. IMEI).

Gemäß einer ersten Ausführungsvariante der Erfindung, Manipulationssicherheit sicherzustellen, umfasst die im einmal-programmierbaren Speicher gespeicherte Information die Endgerät-Seriennummer selbst, oder sie besteht genau aus der Endgerät-Seriennummer selbst. Hierbei ist die Endgerät-Seriennummer nur einmalig speicherbar, z.B. im Produktionsprozess des Chipset, und danach nicht mehr änderbar und somit auf direktem Weg gegen Manipulation gesichert.

Gemäß einer zweiten Ausführungsvariante der Erfindung, Manipulationssicherheit sicherzustellen, umfasst die im einmal-programmierbaren Speicher gespeicherte Information nicht direkt die Endgerät-Seriennummer, sondern einen Schlüssel, mit dem die Endgerät-Seriennummer gesichert ist. Die Endgerät-Seriennummer ist in einem anderen Speicher gespeichert, der kein einmal-programmierbarer Speicher zu sein braucht und gemäß einer Ausführungsform sogar gezielt ein wiederbeschreibbarer Speicher ist. Der Schlüssel, und damit die Sicherung der Endgerät-Seriennummer, wiederum ist gemäß einer von zwei Varianten gestaltet. Gemäß einer ersten Variante ist der Schlüssel ein Verschlüsselungsschlüssel zur Verschlüsselung der Endgerät-Seriennummer. Gemäß einer zweiten Variante ist der Schlüssel ein Sicherungsschlüssel, aus dem sich ein Verschlüsselungsschlüssel zur Verschlüsselung der Endgerät-Seriennummer erst ableiten lässt. In beiden Fällen ist die Endgerät-Seriennummer mit dem Verschlüsselungsschlüssel verschlüsselt. Im ersten Fall ist der Verschlüsselungsschlüssel direkt im OTP gespeichert. Im zweiten Fall lässt sich aus dem im OTP gespeicherten Sicherungsschlüssel der Verschlüsselungsschlüssel erst ableiten. Das Chipset umfasst bei der zweiten Ausführungsvariante, bei jedweder Variante von Schlüssel, weiter eine Verschlüsselungs-Einrichtung, die eingerichtet ist, die Endgerät-Seriennummer mit dem Verschlüsselungsschlüssel zu einer verschlüsselten Endgerät-Seriennummer zu verschlüsseln und die verschlüsselte Endgerät-Seriennummer im Chipset zu speichern, in einem hierfür vorgesehenen Speicher.

Gemäß Ausführungsformen der Erfindung ist an den Secure Processor ein, gemäß manchen Ausführungsformen gezielt wiederbeschreibbarer, nicht-flüchtiger Speicher angekoppelt oder ankoppelbar ist, wobei die Verschlüsselungs-Einrichtung eingerichtet ist, die verschlüsselte Endgerät-Seriennummer in den nicht-flüchtigen Speicher zu speichern.

Bei der zweiten Ausführungsvariante ist die Endgerät-Seriennummer indirekt gegen Manipulation gesichert, indem die Information zur Sicherung der Endgerät-Seriennummer nur einmalig speicherbar ist, z.B. im Produktionsprozess des Chipset, und danach nicht mehr änderbar ist. Die Endgerät-Seriennummer selbst ist bei der zweiten Ausführungsvariante in einem nicht-flüchtigen Speicher gespeichert, in mittels der Information zur Sicherung gesicherter Form, z.B. in mit dem Verschlüsselungsschlüssel verschlüsselter Form als verschlüsselte Endgerät-Seriennummer. Bei den Ausführungsformen, bei denen die gesicherte (z.B. verschlüsselte) Endgerät-Seriennummer in einem nichtflüchtigen Speicher gespeichert ist, der wiederbeschreibbar ist, ist es einer autorisierten Instanz, die Zugriff auf die Sicherungs-Information hat, möglich, die Endgerät-Seriennummer zu aktualisieren. Über die Sicherungs-Information im einmal-programmierbaren Speicher OTP ist gleichzeitig der Schutz der Endgerät-Seriennummer gegen nichtautorisierte Manipulation sichergestellt.

Der nicht-flüchtige Speicher ist gemäß einer Alternative als außerhalb des Secure Processor, und dabei innerhalb des Chipset, angeordneter externer (extern, da nicht direkt auf der Chipfläche des Secure Processor vorgesehen) Speicher des Chipset gestaltet, und ist über einen Systembus des Chipset an den Secure Processor angekoppelt oder ankoppelbar. Gemäß einer weiteren Alternative ist der nicht-flüchtige Speicher als innerhalb des Secure Processor angeordneter integrierter interner Speicher gestaltet, der auf Chiptechnologie-Ebene auf der Chipfläche des Secure Processor integriert ist.

Wahlweise enthält das Chipset ein integriertes Teilnehmeridentitätsmodul iUICC, in dem ein Subskriptions-Profil abgespeichert oder implementiert ist, oder das eingerichtet ist, ein Subskriptions-Profil abzuspeichern und zu implementieren.

Ein erfindungsgemäßes Verfahren zur Aktualisierung der Endgerät-Seriennummer in einem erfindungsgemäßen Chipset umfasst die Schritte:
b) im Chipset, Empfangen einer aktualisierten Endgerät-Seriennummer, die dazu vorgesehen ist, die im Chipset gespeicherte Endgerät-Seriennummer zu ersetzen, und Zuführen der aktualisierten Endgerät-Seriennummer zum Secure Processor;
c) im Secure Processor, in Reaktion auf das Empfangen aus Schritt b), Gewinnen des Verschlüsselungsschlüssels, durch:
   - entweder Auslesen des Verschlüsselungsschlüssels aus dem einmal-programmierbaren Speicher;
   - oder Auslesen des Sicherungsschlüssels aus dem einmal-programmierbaren Speicher und anschließendes Ableiten des Verschlüsselungsschlüssels aus dem Sicherungsschlüssel;
d) Verschlüsseln der aktualisierten Endgerät-Seriennummer mit dem Verschlüsselungsschlüssel zu einer verschlüsselten aktualisierten Endgerät-Seriennummer;
e) Speichern der verschlüsselten aktualisierten Endgerät-Seriennummer im (wiederbeschreibbaren) nicht-flüchtigen Speicher.

Das Verfahren umfasst wahlweise weiter, vor Schritt b), den Schritt a) Senden der aktualisierten Endgerät-Seriennummer von einem Server an das Chipset, und Entgegennehmen der gesendeten aktualisierten Endgerät-Seriennummer durch das Chipset.

Wahlweise wird die aktualisierte Endgerät-Seriennummer in einem isolierten Schritt oder Verfahren zum Aktualisieren der Endgerät-Seriennummer an das Chipset gesendet, der ausschließlich oder überwiegend das Aktualisieren der Endgerät-Seriennummer zum Ziel und Inhalt hat.

Wahlweise, alternativ, ist das Aktualisieren der Endgerät-Seriennummer in eine (Erst-)Übertragung oder eine Aktualisierung eines Subskriptions-Profils oder eines Betriebssystems an das Chipset integriert. Bei dieser alternativen Vorgehensweise, enthält das Chipset ein integriertes Teilnehmeridentitätsmodul, in dem mindestens ein Subskriptions-Profil abgespeichert ist, oder das zum Abspeichern eines Subskriptions-Profils eingerichtet ist. Dabei erfolgt das a) Senden der aktualisierten Endgerät-Seriennummer als Bestandteil eines Übertragens eines Subskriptions-Profils oder eines Betriebssystems an das Chipset, oder als Bestandteil einer Subskriptionsaktualisierung oder Betriebssystemaktualisierung für ein bereits im Chipset vorhandenes Subskriptions-Profil. Diese Vorgehensweise hat den Vorteil, dass ein Subskriptions-Profil bzw. Betriebssystem und eine im Zusammenhang damit verwendete Endgerät-Serien-nummer automatisch konsistent gehalten werden.

Gemäß Ausführungsformen des Verfahrens umfasst das Chipset einen Baseband Processor, und das Zuführen der aktualisierten Endgerät-Seriennummer zum Secure Processor umfasst ein Senden der aktualisierten Endgerät-Seriennummer vom Baseband Processor an den Secure Processor über den Secure Channel zwischen dem Baseband Processor und dem Secure Processor. Der Secure Processor verfügt über Sicherheitsressourcen zur sicheren Handhabung von Endgerät-Seriennummern, der Baseband Processor hingegen nicht, oder zumindest nicht notwendigerweise. Der Baseband Processor stellt dem Chipset andererseits eine Schnittstelle zu einem OTA Server zur Verfügung, der eine aktualisierte Endgerät-Seriennummer für das Chipset bereithält. OTA (OTA = over the air) Server sind in Zusammenhang mit mobilfunkfähigen Endgeräten, die ein Teilnehmeridentitätsmodul haben, dazu eingerichtet, über eine Mobilfunkverbindung mit dem Teilnehmeridentitätsmodul zu kommunizieren. Der Secure Processor selbst hat keine Schnittstelle zu OTA Servern. Der Secure Channel zwischen dem Baseband Processor und dem Secure Processor ermöglicht, eine am Baseband Processor vom OTA Server empfangene aktualisierte Endgerät-Seriennummer innerhalb des Chipset gesichert zum Secure Processor weiterzuleiten. Die Absicherung der Kommunikation vom OTA Server zum Baseband Processor ist nicht Gegenstand dieser Anmeldung, und kann z.B. mit bekannten Mitteln erfolgen.

Das Verfahren umfasst wahlweise weiter den Schritt: f) Unbrauchbarmachen der gespeicherten Endgerät-Seriennummer durch Löschen der gespeicherten verschlüsselten Endgerät-Seriennummer, Überspeichern der verschlüsselten Endgerät-Seriennummer mit der aktualisierten verschlüsselten Endgerät-Seriennummer oder anderweitiges Unbrauchbarmachen.

Das Verfahren umfasst wahlweise weiter, anlässlich des Empfangens einer aktualisierten Endgerät-Seriennummer, Authentisierung oder/und Verifizierung eines Zählers. Die Authentisierung ist eine Authentisierung des Servers gegenüber dem Chipset mittels eines oder mehrerer im einmal-programmierbaren Speicher abgelegter Authentisierungsschlüssel(s). Die Verifizierung ist ein Verifizieren einer zusammen mit der aktualisierten Endgerät-Seriennummer empfangenen Zählerinformation gegenüber einer im einmal-programmierbaren Speicher gespeicherten Referenz-Zählerinformation, um zu bewirken, dass das Speichern der aktualisierten Endgerät-Seriennummer nur höchstens dann zugelassen wird, falls eine durch die Referenz-Zählerinformation festgelegte Anzahl von Aktualisierungen der Endgerät-Seriennummer noch nicht überschritten ist.

### Kurze Beschreibung der Zeichnungen

Im Folgenden wird die Erfindung an Hand von Ausführungsbeispielen und unter Bezugnahme auf die Zeichnung näher erläutert, in der zeigt:

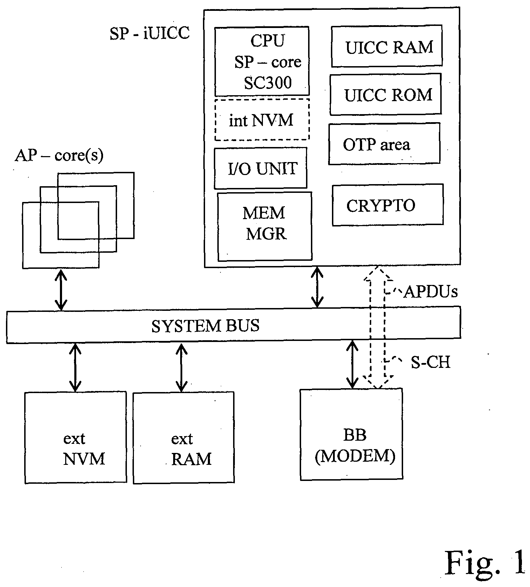

- Fig. 1: in schematischer Darstellung ein Chipset gemäß einer Ausführungsform der Erfindung.

### Detaillierte Beschreibung von Ausführungsbeispielen

Fig. 1 zeigt, in schematischer Darstellung, ein Chipset gemäß einer Ausführungsform der Erfindung. Das Chipset umfasst folgende Komponenten: einen Secure Processor SP, einen Baseband Core Processor BB (ein BB wird teils auch als Modem bezeichnet), einen Application Processor AP (mit ein oder mehreren, hier mehreren, Prozessor-Cores, d.h. Prozessorkernen oder CPUs), einen Speicherchip mit einem außerhalb des Secure Processor SP, aber innerhalb des Chipset angeordneten wiederbeschreibbaren nichtflüchtigen Speicher NVM. Das Chipset ist in ein Chipset Package eingehäust. Der nicht-flüchtige Speicher NVM ist im Beispiel aus Fig. 1 als zwar innerhalb des Chip Package aber außerhalb des Secure Processor SP angeordneter externer Speicher ext NVM vorgesehen (also nicht intern, direkt auf dem Chip des Secure Processor SP gelegen), kann aber alternativ auch ganz außerhalb des Chip Package liegen. In einer weiteren Ausprägung, die in Fig. 1 gestrichelt dargestellt ist, ist der nicht-flüchtige Speicher NVM ein interner Speicher int NVM des Secure Processor SP, der dem Secure Processor SP fest zugeordnet ist und in den Chip des Secure Processor SP integriert ist, beispielsweise auf Ebene der integrierten Halbleiter-Fertigungstechnologie integriert. Die Komponenten sind in Fig. 1 über einen Systembus miteinander gekoppelt. Zwischen dem Secure Processor SP und dem Baseband Core Processor BB ist, physisch gesehen über den Systembus, ein Secure Channel S-CH eingerichtet, über den der Secure Processor SP und der Baseband Core Processor BB gesichert Daten austauschen können. Die Daten werden zwischen Secure Processor SP und Baseband Core Processor BB im Secure Channel S-CH auf Protokollebene als APDU Kommandos gemäß dem aktuell verbreitet verwendeten Standard ISO 7816 ausgetauscht. Alternativ werden die Daten in einem anderen Format als dem ISO 7816 APDU Format ausgetauscht. Der Secure Channel S-CH wird durch Authentisierung und Schlüsselvereinbarung eingerichtet und durch anschließenden verschlüsselten Austausch von Daten betrieben.

Der Secure Processor SP umfasst einen SP Core (d.h. eine CPU), einen einmal-programmierbaren Speicher OTP area, einen Nur-Lese-Speicher UICC ROM, einen exklusiven Arbeitsspeicher UICC RAM des Secure Processor SP, eine Kryptoeinheit CRYPTO, eine Speicherverwaltung Mem Mgr und eine Schnittstelleneinheit I/O Unit. Wie erwähnt kann auf der Chipfläche des Secure Processor SP weiter, zusätzlich zum einmal-beschreibbaren Speicher OTP, ein wiederbeschreibbarer nicht-flüchtigen Speicher NVM beinhaltet sein, wie gestrichelt angedeutet. Die Speicherverwaltung Mem Mgr, die Kryptoeinheit CRYPTO und die Schnittstelleneinheit I/O Unit sind in Zusammenwirkung miteinander eingerichtet, den Secure Channel S-CH zwischen dem Secure Processor SP und dem Baseband Core Processor BB einzurichten und zu betreiben, mittels Authentisierung und Verschlüsselung. Im Secure Processor SP ist ein integriertes Teilnehmeridentitätsmodul iUICC eingerichtet. Der Nur-Lese-Speicher UICC ROM und der Arbeitsspeicher UICC RAM sind speziell für integrierte Teilnehmeridentitätsmodule iUICC auf dem Secure Processor SP vorgesehen. Das Chipset hat weiter einen allgemeinen Arbeitsspeicher RAM, hier als externer Arbeitsspeicher ext RAM dargestellt, der außerhalb des Secure Processor SP liegt und den übrigen Prozessorkernen als Arbeitsspeicher zur Verfügung steht.

Im einmal-programmierbaren Speicher OTP area sind Schlüssel für die Authentisierung und Verschlüsselung zum Einrichten und Betreiben des Secure Channel S-CH gespeichert. Im einmal-programmierbaren Speicher OTP area ist weiter, gemäß einer ersten Alternative der Erfindung die Endgerät-Seriennummer IMEI gespeichert. Im Fall mehrerer IMEIs sind die mehreren Endgerät-Seriennummern IMEI, IMEI', IMEI", ... gespeichert. Die Endgerät-Seriennummer(n) IMEI ist (sind) entweder im Klartext oder in verschlüsselter Form als enc(IMEI) im einmal-programmierbaren Speicher OTP area gespeichert. Gemäß einer zweiten Alternative der Erfindung ist (sind) die Endgerät-Seriennummer(n) IMEI (, IMEI', IMEI", ...) im (externen oder internen) wiederbeschreibbaren nicht-flüchtigen Speicher NVM (ext NVM oder int NVM) gespeichert, vor allem im Fall von ext NVM zwingend in verschlüsselter Form als enc(IMEI), verschlüsselt mit einem Verschlüsselungsschlüssel. Der Verschlüsselungsschlüssel, oder ein Sicherungsschlüssel, aus dem sich der Verschlüsselungsschlüssel ableiten lässt, ist bei dieser zweiten Variante im einmal-programmierbaren Speicher OTP area abgespeichert.

Für das Konzept einer integrierten iUICC sowie einer eUICC ist ein Mechanismus wünschenswert, bei dem neben den Profildaten ggf. auch das komplette Betriebssystem über die Ferne ausgetauscht werden kann, da ja nicht einfach die SIM-Karte körperlich ausgetauscht werden kann. Dieser Mechanismus wird auch als eSIM Management bezeichnet. Da sich über den Lebenszyklus der Hardware (des Chipsets) die Subskriptionen, Betriebssysteme und Netzbetreiber theoretisch beliebig oft ändern können, ist die Ablage der IMEI für die jeweilige Subskription in einem wiederbeschreibbaren nicht-flüchtigen Speicher zu bevorzugen. Ebenso ist es möglich, wenn ein ausreichend großer wiederbeschreibbarer nicht-flüchtigen Speicher vorgesehen ist, dass sich mehrere Profile oder Betriebssysteme, oder mehrere iUICCs, parallel auf dem Chipset befinden. Daher ist es, zugunsten einfacherer Zuordenbarkeit zwischen IMEI und Profil/ Betriebssystem, vorteilhaft die IMEI als Bestandteil des Subskriptions-Update über das Remote Management System gemeinsam mit dem Profil / Betriebssystem OS der iUICC bzw. eUICC zu verwalten. So kann im Falle des Betriebsystem- bzw. Profilwechsels oder bei Aufbringung von parallel aktiven unterschiedlichen Subskriptionen (von ggf. verschiedenen Netzwerk-Betreibern) die IMEI entweder als integraler Bestandteil der Subskription (z.B. in einem dedizierten Elementary File in der UICC Datenstruktur) oder als separater Dateninhalt, allerdings im gleichen Aktualisierungsvorgang, auf das Gerät übertragen werden. Dadurch wird gewährleistet, dass immer eine dedizierte IMEI der jeweils gültigen und ausgeführten Subskription zugeordnet ist.

### Zitierter Stand der Technik

[1] ETSI TS 122 016, Digital cellular telecommunications system (Phase 2+); Universal Mobile Telecommunications System (UMTS); LTE; International Mobile Equipment Identities (IMEI); 3GPP TS 22.016 version 10.0.0 Release 10;
[2] US 2006/ 0236111 A1;
[3] US 2007/ 0050622 A1;
[4] US 2012/ 0011345 A1;
[5] WO 2014/ 134829 A1;
[6] US 2010/0180130 A1;
[7] CN 102 083 055 A.

## Patentansprüche

1. Chipset für ein Endgerät das Chipset umfassend zumindest einen Secure Processor, in den ein einmal-programmierbarer Speicher (OTP area) integriert ist, wobei im Chipset mindestens eine Endgerät-Seriennummer des Endgeräts gespeichert ist,
wobei das Chipset ein integriertes Teilnehmeridentitätsmodul enthält, in dem ein Subskriptions-Profil als Komponente des Chipsets abgespeichert ist, oder das eingerichtet ist, ein Subskriptions-Profil als Komponente des Chipsets abzuspeichern, und
wobei im einmal-programmierbaren Speicher (OTP area) Information zur Sicherung der Endgerät-Seriennummer gegen Manipulation gespeichert ist, und
wobei eine Aktualisierung der Endgerät-Seriennummer in eine Übertragung oder eine Aktualisierung des Subskriptions-Profils an das Chipset integriert ist.

2. Chipset nach Anspruch 1, wobei ein Zugriff auf die im einmal-programmierbaren Speicher (OTP area) gespeicherte Information zur Sicherung der Endgerät-Seriennummer oder/und auf die Endgerät-Seriennummer ausschließlich durch den Secure Processor möglich ist.

3. Chipset nach Anspruch 2, das mindestens einen weiteren Prozessor umfasst, wobei ein Zugriff auf die im einmal-programmierbaren Speicher (OTP area) gespeicherte Information zur Sicherung der Endgerät-Seriennummer oder /und auf die Endgerät-Seriennummer durch den mindestens einen weiteren Prozessor nicht möglich ist.

4. Chipset nach Anspruch 3, das als einen weiteren Prozessor einen Baseband Processor, (BB) umfasst, der für eine Funkverbindung zwischen dem Chipset und einem Server außerhalb des Chipsets eingerichtet ist, und wobei der Secure Processor und der Baseband Processor (BB) dazu eingerichtet sind, einen Secure Channel (S-CH) zwischen dem Secure Processor und dem Baseband Processor (BB) einzurichten und zu betreiben, so dass über die Funkverbindung vom Server an das Chipset gesendete Nachrichten vom Baseband Processor (BB) entgegengenommen werden können und über den Secure Channel (S-CH) an den Secure Processor weitergeleitet werden können.

5. Chipset nach einem der Ansprüche 1 bis 4, wobei im Chipset mindestens zwei, oder mehr, Endgerät-Seriennummer, IMEI, IMEI', IMEI"...,des Endgeräts gleichzeitig gespeichert sind, wobei mindestens zwei, oder mehr, Endgerät-Seriennummern, IMEI, IMEI', IMEI"...,mindestens zwei unterschiedlichen Komponenten des Chipset zugeordnet sind.

6. Chipset nach einem der Ansprüche 1 bis 5, wobei die im einmal-programmierbaren Speicher (OTP area) gespeicherte Information die Endgerät-Seriennummer umfasst oder aus der Endgerät-Seriennummer besteht.

7. Chipset nach einem der Ansprüche 1 bis 6, wobei die im einmal-programmierbaren Speicher (OTP area) gespeicherte Information einen Schlüssel umfasst, der gestaltet ist: als Verschlüsselungsschlüssel zur Verschlüsselung der Endgerät-Seriennummer; oder als Sicherungsschlüssel, aus dem ein Verschlüsselungsschlüssel zur Verschlüsselung der Endgerät-Seriennummer ableitbar ist; und wobei das Chipset weiter eine Verschlüsselungs-Einrichtung umfasst, die eingerichtet ist, die Endgerät-Seriennummer mit dem Verschlüsselungsschlüssel zu einer verschlüsselten Endgerät-Seriennummer zu verschlüsseln und die verschlüsselte Endgerät-Seriennummer im Chipset zu speichern.

8. Chipset nach Anspruch 7, wobei an den Secure Processor ein nicht-flüchtiger Speicher angekoppelt oder ankoppelbar ist, und wobei die Verschlüsselungs-Einrichtung eingerichtet ist, die verschlüsselte Endgerät-Seriennummer in den nicht-flüchtigen Speicher zu speichern.

9. Chipset nach Anspruch 8, wobei der nicht-flüchtige Speicher entweder als außerhalb des Secure Processor angeordneter externer Speicher (ext NVM) des Chipsets gestaltet ist und über einen Systembus des Chipsets an den Secure Processor angekoppelt oder ankoppelbar ist, oder alternativ als innerhalb des Secure Processor angeordneter, auf Chipebene auf dem Chip des Secure Processor SP integrierter interner Speicher (int NVM) gestaltet ist.

10. Verfahren zur Aktualisierung der Endgerät-Seriennummer in einem Chipset nach einem der Ansprüche 7 bis 9, umfassend die Schritte:
b) im Chipset, Empfangen einer aktualisierten Endgerät-Seriennummer, die dazu vorgesehen ist, die im Chipset gespeicherte Endgerät-Seriennummer zu ersetzen, und Zuführen der aktualisierten Endgerät-Seriennummer zum Secure Processor
c) im Secure Processor, in Reaktion auf das Empfangen aus Schritt b), Gewinnen des Verschlüsselungsschlüssels, durch:
- entweder Auslesen des Verschlüsselungsschlüssels aus dem einmal-programmierbaren Speicher (OTP area);
- oder Auslesen des Sicherungsschlüssels aus dem einmal-programmierbaren Speicher (OTP area) und anschließendes Ableiten des Verschlüsselungsschlüssels aus dem Sicherungsschlüssel;
d) Verschlüsseln der aktualisierten Endgerät-Seriennummer mit dem Verschlüsselungsschlüssel zu einer verschlüsselten aktualisierten Endgerät-Seriennummer;
e) Speichern der verschlüsselten aktualisierten Endgerät-Seriennummer im nicht-flüchtigen Speicher.

11. Verfahren nach Anspruch 10, weiter umfassend, vor Schritt b), den Schritt:
a) Senden der aktualisierten Endgerät-Seriennummer von einem Server an das Chipset.

12. Verfahren nach Anspruch 11, wobei das Chipset ein integriertes Teilnehmeridentitätsmodul enthält, in dem mindestens ein Subskriptions-Profil abgespeichert oder implementiert ist, oder das zum Abspeichern oder Implementieren eines Subskriptions-Profils eingerichtet ist, und wobei das a) Senden der aktualisierten Endgerät-Seriennummer, IMEI*, als Bestandteil eines Übertragens eines Subskriptions-Profils oder eines Betriebssystems an das Chipset, oder als Bestandteil einer Subskriptionsaktualisierung oder Betriebssystemaktualisierung für ein Subskriptions-Profil erfolgt.

13. Verfahren nach einem der Ansprüche 10 bis 12, wobei das Chipset nach Anspruch 4 gestaltet ist und einen Baseband Processor (BB) umfasst, und wobei das Zuführen der aktualisierten Endgerät-Seriennummer zum Secure Processor ein Senden der aktualisierten Endgerät-Seriennummer vom Baseband Processor (BB) an den Secure Processor über den Secure Channel (S-CH) zwischen dem Baseband Processor (BB) und dem Secure Processor umfasst.

14. Verfahren nach einem der Ansprüche 10 bis 13, weiter umfassend den Schritt:
f) Unbrauchbarmachen der gespeicherten Endgerät-Seriennummer durch Löschen der gespeicherten verschlüsselten Endgerät-Seriennummer, Überspeichern der verschlüsselten Endgerät-Seriennummer mit der aktualisierten verschlüsselten Endgerät-Seriennummer oder anderweitiges Unbrauchbarmachen.

15. Verfahren nach einem der Ansprüche 10 bis 14, weiter umfassend, anlässlich des Empfangens einer aktualisierten Endgerät-Seriennummer:
- Authentisierung des Servers gegenüber dem Chipset mittels eines oder mehrerer im einmal-programmierbaren Speicher (OTP area) abgelegter Authentisierungsschlüssels bzw. -schlüssel; oder/und
- Verifizieren einer zusammen mit der aktualisierten Endgerät-Seriennummer empfangenen Zählerinformation gegenüber einer im einmal-programmierbaren Speicher (OTP area) gespeicherten Referenz-Zählerinformation, um zu bewirken, dass das Speichern der aktualisierten Endgerät-Seriennummer nur höchstens dann zugelassen wird, falls eine durch die Referenz-Zählerinformation festgelegte Anzahl von Aktualisierungen der Endgerät-Seriennummer noch nicht überschritten ist.

16. Mobilfunkfähiges Endgerät, umfassend ein Chipset nach einem der vorangehenden Chipset-Ansprüche 1 bis 9.

## Claims

1. Chipset for a terminal, the chipset comprising at least one secure processor in which a one-time programmable memory (OTP area) is integrated, wherein at least one terminal serial number of the terminal is stored in the chipset,
wherein the chipset contains an integrated subscriber identity module in which a subscription profile is stored as a component of the chipset, or which is set up to store a subscription profile as a component of the chipset, and
wherein information for protecting the terminal serial number against manipulation is stored in the one-time programmable memory (OTP area), and
wherein an update of the terminal serial number is integrated into a transmission or an update of the subscription profile to the chipset.

2. Chipset according to claim 1, wherein access to the information stored in the one-time programmable memory (OTP area) for protecting the terminal serial number and/or to the terminal serial number is possible exclusively by the secure processor.

3. Chipset according to claim 2, which comprises at least one further processor, wherein access to the information stored in the one-time programmable memory (OTP area) for protecting the terminal serial number and/or to the terminal serial number is not possible by the at least one further processor.

4. Chipset according to claim 3, which comprises, as a further processor, a baseband processor (BB) which is set up for a radio link between the chipset and a server outside the chipset, and wherein the secure processor and the baseband processor (BB) are set up to set up and operate a secure channel (S-CH) between the secure processor and the baseband processor (BB), so that messages sent from the server to the chipset via the radio link can be received by the baseband processor (BB) and can be forwarded to the secure processor via the secure channel (S-CH).

5. Chipset according to any one of claims 1 to 4, wherein at least two or more terminal serial numbers, IMEI, IMEI', IMEI"..., of the terminal are stored simultaneously in the chipset, wherein at least two or more terminal serial numbers, IMEI, IMEI', IMEI"..., are assigned to at least two different components of the chipset.

6. Chipset according to any one of claims 1 to 5, wherein the information stored in the one-time programmable memory (OTP area) comprises the terminal serial number or consists of the terminal serial number.

7. Chipset according to any one of claims 1 to 6, wherein the information stored in the one-time programmable memory (OTP area) comprises a key which is designed: as an encryption key for encrypting the terminal serial number; or as a protection key from which an encryption key for encrypting the terminal serial number can be derived; and wherein the chipset further comprises an encryption device which is set up to encrypt the terminal serial number with the encryption key to form an encrypted terminal serial number and to store the encrypted terminal serial number in the chipset.

8. Chipset according to claim 7, wherein a non-volatile memory is coupled or can be coupled to the secure processor, and wherein the encryption device is set up to store the encrypted terminal serial number in the non-volatile memory.

9. Chipset according to claim 8, wherein the non-volatile memory is either designed as an external memory (ext NVM), arranged outside the secure processor, of the chipset and is coupled or can be coupled to the secure processor via a system bus of the chipset, or alternatively is designed as an internal memory (int NVM), arranged inside the secure processor and integrated on the chip of the secure processor SP at the chip level.

10. Method for updating the terminal serial number in a chipset according to any one of claims 7 to 9, comprising the steps:
b) in the chipset, receiving an updated terminal serial number which is intended to replace the terminal serial number stored in the chipset, and supplying the updated terminal serial number to the secure processor
c) in the secure processor, in response to the reception from step b), obtaining the encryption key by:
- either reading the encryption key from the one-time programmable memory (OTP area);
- or reading the backup key from the one-time programmable memory (OTP area) and subsequently deriving the encryption key from the backup key;
d) encrypting the updated terminal serial number with the encryption key to form an encrypted updated terminal serial number;
e) storing the encrypted updated terminal serial number in the non-volatile memory.

11. Method according to claim 10, further comprising, before step b), the step:
a) sending the updated terminal serial number from a server to the chipset.

12. Method according to claim 11, wherein the chipset contains an integrated subscriber identity module in which at least one subscription profile is stored or implemented, or which is set up to store or implement a subscription profile, and wherein the a) sending of the updated terminal serial number, IMEI*, takes place as part of a transmission of a subscription profile or of an operating system to the chipset, or as part of a subscription update or operating system update for a subscription profile.

13. Method according to any one of claims 10 to 12, wherein the chipset is designed according to claim 4 and comprises a baseband processor (BB), and wherein the supplying of the updated terminal serial number to the secure processor comprises sending the updated terminal serial number from the baseband processor (BB) to the secure processor via the secure channel (S-CH) between the baseband processor (BB) and the secure processor .

14. Method according to any one of claims 10 to 13, further comprising the step:
f) rendering the stored terminal serial number unusable by deleting the stored encrypted terminal serial number, overstoring the encrypted terminal serial number with the updated encrypted terminal serial number or rendering it unusable in some other way.

15. Method according to any one of claims 10 to 14, further comprising, on the occasion of the reception of an updated terminal serial number:
- authenticating the server with respect to the chipset by means of one or more authentication keys stored in the one-time programmable memory (OTP area); or/and
- verifying counter information received together with the updated terminal serial number with respect to reference counter information stored in the one-time programmable memory (OTP area), in order to cause the storage of the updated terminal serial number to be permitted only at most if a number of updates to the terminal serial number stipulated by the reference counter information has not yet been exceeded.

16. Mobile radio-enabled terminal, comprising a chipset according to one of the preceding chipset claims 1 to 9.

## Revendications

1. Jeu de puces pour un terminal, le jeu de puces comprenant au moins un processeur sécurisé dans lequel une mémoire programmable une seule fois (OTP area) est intégrée, dans lequel au moins un numéro de série de terminal est stocké dans le jeu de puces,
dans lequel le jeu de puces contient un module d'identité de l'abonné intégré, dans lequel un profil d'abonnement est stocké en tant que composant du jeu de puces, ou qui est configuré pour stocker un profil d'abonnement en tant que composant du jeu de puces, et
dans lequel des informations sont stockées dans la mémoire programmable une seule fois (OTP area) afin de protéger le numéro de série de terminal contre la manipulation, et
dans lequel une mise à jour du numéro de série de terminal pendant une transmission ou une mise à jour du profil d'abonnement est intégrée sur le jeu de puces.

2. Jeu de puces selon la revendication 1, dans lequel un accès aux informations destinées à sécuriser le numéro de série de terminal et stockées dans la mémoire programmable une seule fois (OTP area) ou/et un accès au numéro de série de terminal est possible exclusivement via le processeur sécurisé.

3. Jeu de puces selon la revendication 2, comprenant au moins un processeur supplémentaire, dans lequel un accès aux informations destinées à sécuriser le numéro de série de terminal et stockées dans la mémoire programmable une seule fois (OTP area) ou/et un accès au numéro de série de terminal n'est pas possible via le au moins un processeur supplémentaire.

4. Jeu de puces selon la revendication 3, comprenant un processeur de bande de base (BB) en tant que processeur supplémentaire, qui est configuré pour une liaison radio entre le jeu de puces et un serveur à l'extérieur du jeu de puces, et dans lequel le processeur sécurisé et le processeur de bande de base (BB) sont configurés pour configurer et exploiter un canal sécurisé (S-CH) entre le processeur sécurisé et le processeur de bande de base (BB), de telle sorte que des messages envoyés du serveur au jeu de puces via la liaison radio peuvent être acceptés par le processeur de bande de base et peuvent être transférés au processeur sécurisé via le canal sécurisé (S-CH).

5. Jeu de puces selon l'une des revendications 1 à 4, dans lequel au moins deux ou plus de deux numéros de série de terminal, IMEI, IMEI', IMEI"..., du terminal sont stockés simultanément dans le jeu de puces, dans lequel au moins deux numéros de série de terminal, IMEI, IMEI', IMEI" ..., ou plus sont attribués à au moins deux composants différents du jeu de puces.

6. Jeu de puces selon l'une des revendications 1 à 5, dans lequel les informations stockées dans la mémoire programmable une seule fois (OTP area) comprennent le numéro de série de terminal ou sont constituées du numéro de série de terminal.

7. Jeu de puces selon l'une des revendications 1 à 6, dans lequel les informations stockées dans la mémoire programmable une seule fois (OTP area) comprennent une clé qui est conçue : comme une clé de chiffrement pour chiffrer le numéro de série de terminal ; ou comme une clé de sécurité à partir de laquelle une clé de chiffrement peut être déduite pour chiffrer le numéro de série de terminal ; et dans lequel le jeu de puces comprend en outre un dispositif de chiffrement qui est configuré pour chiffrer le numéro de série de terminal avec la clé de chiffrement afin de former un numéro de série de terminal chiffré et pour stocker le numéro de série de terminal chiffré dans le jeu de puces.

8. Jeu de puces selon la revendication 7, dans lequel une mémoire non volatile est couplée ou peut être couplée au processeur sécurisé et dans lequel le dispositif de chiffrement est configuré pour stocker le numéro de série de terminal chiffré dans la mémoire non volatile.

9. Jeu de puces selon la revendication 8, dans lequel la mémoire non volatile est conçue soit comme une mémoire externe (ext NVM) du jeu de puces disposée à l'extérieur du processeur sécurisé et couplée ou pouvant être couplée au processeur sécurisé via un bus de système du jeu de puces, ou, en variante, comme une mémoire interne (int NVM) intégrée à l'intérieur du processeur sécurisé, au niveau puce sur la puce du processeur sécurisé SP.

10. Procédé pour mettre à jour le numéro de série de terminal dans un jeu de puces selon l'une des revendications 7 à 9, comprenant les étapes consistant à :
b) dans le jeu de puces, recevoir un numéro de série de terminal mis à jour qui est destiné à remplacer le numéro de série de terminal stocké dans le jeu de puces, et fournir le numéro de série de terminal mis à jour au processeur sécurisé,
c) dans le processeur sécurisé, en réponse à la réception de l'étape b), obtenir la clé de chiffrement :
- soit par lecture de la clé de chiffrement à partir de la mémoire programmable une seule fois (OTP area) ;
- soit par lecture de la clé de sécurité à partir de la mémoire programmable une seule fois (OTP area), puis déduction de la clé de chiffrement à partir de la clé de sécurité ;
d) chiffrer le numéro de série de terminal mis à jour avec la clé de chiffrement pour former un numéro de série de terminal chiffré ;
e) stocker le numéro de série de terminal mis à jour chiffré dans la mémoire non volatile.

11. Procédé selon la revendication 10, comprenant en outre, avant l'étape b), l'étape consistant à :
a) envoyer le numéro de série de terminal mis à jour à partir d'un serveur, au jeu de puces.

12. Procédé selon la revendication 11, dans lequel le jeu de puces contient un module d'identité de l'abonné intégré, dans lequel au moins un profil d'abonnement est enregistré ou implémenté, ou qui est configuré pour stocker ou implémenter un profil d'abonnement, et dans lequel l'envoi a) du numéro de série de terminal mis à jour, IMEI*, est effectué en tant que partie d'une transmission d'un profil d'abonnement ou d'un système d'exploitation au jeu de puces, ou en tant que partie d'une mise à jour d'abonnement ou d'une mise à jour de système d'exploitation pour un profil d'abonnement.

13. Procédé selon l'une des revendications 10 à 12, dans lequel le jeu de puces est conçu selon la revendication 4 et comprend un processeur de bande de base (BB), et dans lequel la fourniture du numéro de série de terminal mis à jour dans le processeur sécurisé comprend un envoi du numéro de série de terminal mis à jour du processeur de bande de base (BB) au processeur sécurisé via le canal sécurisé (S-CH) entre le processeur de bande de base (BB) et le processeur sécurisé.

14. Procédé selon l'une des revendications 10 à 13, comprenant en outre l'étape consistant à :
f) rendre le numéro de série de terminal stocké inutilisable en supprimant le numéro de série de terminal chiffré stocké, écraser le numéro de série de terminal chiffré avec le numéro de série de terminal chiffré mis à jour, ou sinon le rendre inutilisable.

15. Procédé selon l'une des revendications 10 à 14, comprenant en outre, à réception d'un numéro de série de terminal mis à jour, les étapes consistant à :
- authentifier le serveur vis-à-vis du jeu de puces au moyen d'une ou plusieurs clés d'authentification déposées dans la mémoire programmable une seule fois (OTP area) ; ou/et
- vérifier une information de compteur reçue avec le numéro de série de terminal mis à jour par rapport à une information de compteur de référence stockée dans la mémoire programmable une seule fois (OTP area), afin d'amener le stockage du numéro de série de terminal mis à jour à être tout au plus permis si un nombre de mises à jour du numéro de série de terminal, déterminé par l'information de compteur de référence, n'a pas encore été dépassé.

16. Terminal capable d'établir des communications mobiles, comprenant un jeu de puces selon l'une des revendications de jeu de puces 1 à 9 précédentes.
